# EUROPÄISCHE PATENTSCHRIFT

(11) **EP 1 120 160 B1**
(45) Veröffentlichungstag und Bekanntmachung des Hinweises auf die Patenterteilung: **17.09.2003**
(21) Anmeldenummer: 00127625.2
(22) Anmeldetag: 16.12.2000
(51) Int. Cl.: B01J 31/16, C07B 31/00, C08F 8/00

(54) **Polymere Diphosphinliganden für homogen lösliche Hydrierkatalysatoren, Verfahren zu deren Herstellung und Verwendung**
Polymeric diphosphine ligands for homogeneously soluble hydrogenation catalysts, process for their preparation and use thereof
Ligands diphosphoniques polymères pour catalyseurs d'hydrogénation solubles de façon homogène, leur procédé de préparation et leur utilisation

(30) Priorität: 24.01.2000 DE 10002973
(43) Veröffentlichungstag der Anmeldung: 01.08.2001
(73) Patentinhaber: Degussa AG, 40474 Düsseldorf (DE)
(72) Erfinder: Burkhardt, Olaf, Dr., 2920 Kalmthout (DE); Wöltinger, Jens, Dr., 63456 Hanau (DE); Bommarius, Andreas, Dr., 30327 Atlanta, GA (US); Almena, Juan, Dr., 63450 Hanau (DE); Henniges, Hans, Dr., 53111 Bonn (DE); Drauz, Karlheinz, Prof., 63579 Freigericht (DE); Karau, Andreas, Dr., 67434 Neustad (DE); Philippe, Jean-Louis, Dr., 63303 Dreieich (DE); Krimmer, Hans-Peter, Dr., 63128 Dietzenbach (DE); Oehme, Günther, Prof., 18059 Rostock (DE)

(56) Entgegenhaltungen:
- EP-A- 0 336 123
- DE-A- 19 647 892
- US-A- 4 424 312
- US-A- 4 634 775
- US-A- 4 879 389
- US-A- 5 777 062

## Beschreibung

Die vorliegende Erfindung betrifft molekulargewichtsvergrößerte Liganden für Katalysatoren für die asymmetrische homogene Hydrierung von Doppelbindungen.

Derartige katalytisch wirksame Spezies sind für industrielle Synthesen von organischen Substanzen äußerst vorteilhaft, da sie aufgrund ihrer verbesserten Recyclierbarkeit helfen, Herstellungskosten niedrig zu halten.

Molekulargewichtsvergrößerte Katalysatoren zur homogenen enantioselektiven Hydrierung sind aus dem Stand der Technik bereits bekannt. In der J. Am. Chem. Soc. 1998, 120, 9481f. wird auf das Problem eingegangen, lösliche Molekulargewichtsvergrößerungen für u.a. Hydrierkatalysatoren herzustellen. Auch Wandrey et al. berichteten über einen Einsatz eines molekulargewichtsvergrößerten Hydrierkatalysators in einem Membranreaktor (Angew. Chem. 1990, 102, 445f.). In der US 5,777,062 werden homogen lösliche polymervergrößerte Liganden für Hydrierkatalysatoren angegeben. Die monomeren Liganden sind dabei über Urethan- oder Harnstoff-Linker an das Polymerbackbone gebunden.

Bis heute sind für den Einsatz derartiger Katalysatoren noch nicht alle Probleme ausreichend behoben, weshalb immer noch ein Bedarf an neuen Katalysatorsystemen herrscht, die es ermöglichen kontinuierliche Prozesse katalytisch durchzuführen. So hat man mit Problemen wie z.B. Abtrennbarkeit von Produkt vom Katalysator im Hinblick auf die eingesetzte Membran sowie der Inaktivierung des Katalysators mit der Zeit zu kämpfen.

Aufgabe der vorliegenden Erfindung war es weitere Liganden für Katalysatoren für den oben angegebenen Zweck bereitzustellen.

Diese Aufgabe wird durch Liganden für Katalysatoren mit den Merkmalen des Anspruchs 1 gelöst. Ansprüche 2-4 sind auf bestimmte bevorzugte Ausführungsformen der Liganden gerichtet. Anspruch 5 beschreibt ein bevorzugtes Herstellverfahren und Ansprüche 6-8 vorteilhafte Verwendungen der Liganden. Anspruch 9 ist auf spezielle Katalysatoren gerichtet.

Dadurch, daß man molekulargewichtsvergrößerte homogen lösliche Liganden mit einem mittleren Molekulargewicht von 1.000 - 1.000.000 g/mol bereitstellt, welche homochirale aktive Zentren aus Bis-(3,4-diarylphosphinyl)-pyrrolidinen aufweisen, wobei diese aktiven Zentren über einen Linker ausgewählt aus der Gruppe

| | | |
|---|---|---|
| a) | -Si (R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)ₙ-W | n=0-20 |
| g) | Z-(X)ₙ-W | n=0-20 |

wobei
R bedeutet H, (C₁-C₈)-Alkyl, (C₆-C₁₈) -Aryl, (C₇-C₁₉)-Aralkyl, ((C₁-C₈)-Alkyl)₁₋₃-(C₆-C₁₈) -Aryl,
X bedeutet (C₆-C₁₈)-Arylen, (C₁-C₈)-Alkylen, (C₁-C₈)-Alkenylen, ((C₁-C₈)-Alkyl)₁₋₃(C₆-C₁₈)-Arylen, (C₇-C₁₉)-Aralkylen,
Z bedeutet polymerseitig C(=O)O-, C(=O)NH-, C(=O)-, NR, O, CHR, CH₂, C=S, S, PR,
W bedeutet ligandenseitig C(=O)O-, C(=O)NH-, C(=O)-, NR, O, CHR, CH₂, C=S, S, PR,
oder direkt an das molekulargewichtsvergrößernde Polymer gebunden sind, erhält man die Möglichkeit weitere sehr gut recyclierbare polymervergrößerte Hydrierkatalysatoren für die industrielle organische Synthese einzusetzen.

Die Molekulargewichtsvergrößerung kann im Rahmen der Erfindung frei gewählt werden. Sie wird einerseits durch Praktikabilitäts- und Kostenerwägungen, andererseits durch technische Rahmenbedingungen (Rückhaltevermögen, Löslichkeit etc.) begrenzt. Aus dem Stand der Technik sind einige Polymervergrößerungen für Katalysatoren bekannt (Reetz et al., Angew. Chem. 1997, 109, 1559f.; Seebach et al., Helv. Chim Acta 1996, 79, 1710f.; Kragl et al., Angew. Chem. 1996, 108, 684f.; Schurig et al., Chem. Ber./Recueil 1997, 130, 879f.; Bolm et al., Angew. Chem. 1997, 109, 773f.; Bolm et al. Eur. J. Org. Chem. 1998, 21f.; Baystone et al. in Speciality Chemicals 224f.; Salvadori et al., Tetrahedron: Asymmetry 1998, 9, 1479; Wandrey et al., Tetrahedron: Asymmetry 1997, 8, 1529f.; ibid. 1997, 8, 1975f.; Togni et al. J. Am. Chem. Soc. 1998, 120, 10274f., Salvadori et al., Tetrahedron Lett. 1996, 37, 3375f; WO 98/22415; insbesondere DE 19910691.6).

Bevorzugte molekulargewichtsvergrößernde Polymere zur Anbindung der Liganden sind Polyacrylate, Polyvinylpyrrolidinone, Polysiloxane, Polybutadiene, Polyisoprene, Polyalkane, Polystyrole, Polyoxazoline oder Polyether (PEG, PEP) oder Mischungen derselben. Unter Mischungen wird im Rahmen der Erfindung die Tatsache verstanden, daß einzelne Polymere verschiedener Provenienz zu Blockpolymeren zusammenpolymerisiert werden. Auch statistische Mischungen verschiedener Monomere im Polymer sind möglich.

Ganz besonders bevorzugt sind Polyacrylate, Polystyrole, Polysiloxane sowie Polyether für diesen Zweck.

Äußerst bevorzugt sind folgende Strukturen, wobei die Zahlen für a bei 1 und für b bei 10-30, vorzugsweise 20, im statistischen Mittel liegen sollten (Schema 1).

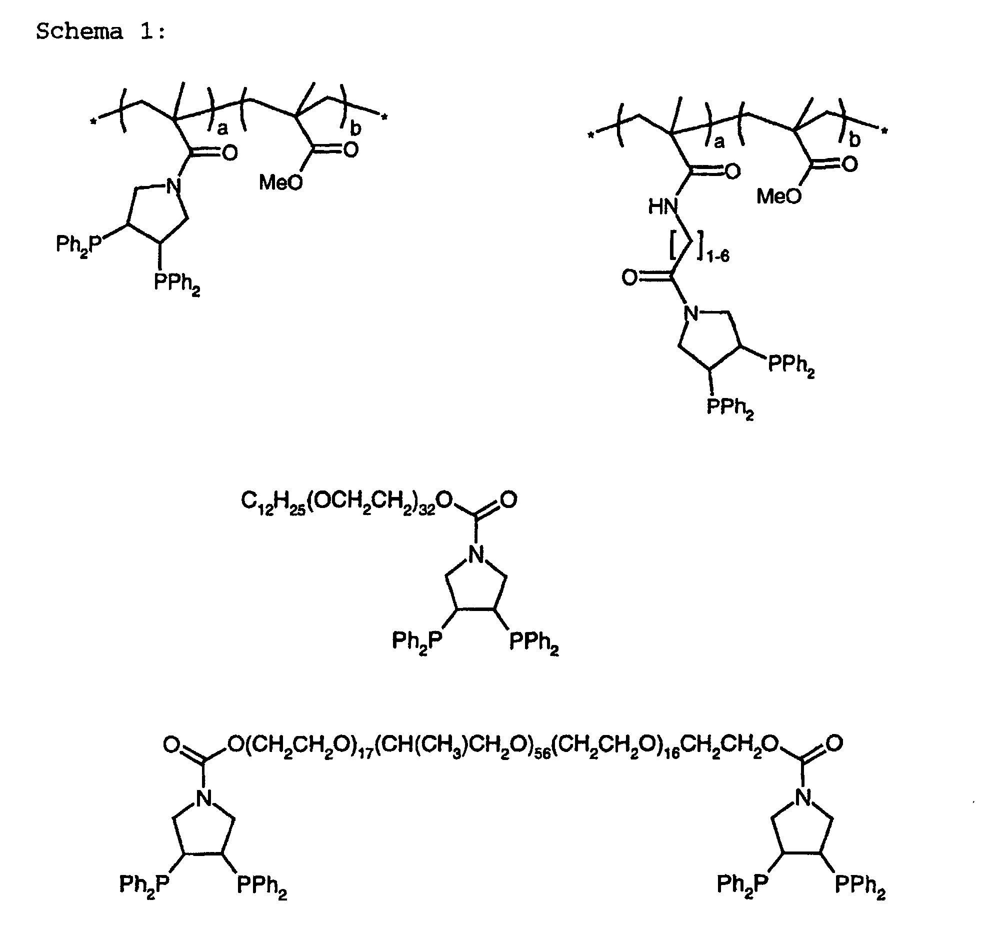

Die molekulargewichtsvergrößernden Polymere weisen vorzugsweise ein mittleres Molekulargewicht im Bereich von 5.000-500.000, besonders bevorzugt 5.000 - 300.000 g/mol aufweisen.

Gegenstand der vorliegenden Anmeldung ist ein Verfahren zur Herstellung von erfindungsgemäßen Liganden, welches sich dadurch auszeichnet, daß man
a) das katalytisch aktive Zentrum mit angebundenem Linker oder direkt an ein Monomer bindet und dieses in Gegenwart nicht modifizierter Monomere polymerisiert,
b) das katalytisch aktive Zentrum über einen Linker oder direkt an das fertige Polymer bindet, oder
c) Polymere nach a) oder b) erstellt und diese mit anderen Polymeren copolymerisiert, welche katalytisch aktive Zentren aufweisen oder keine katalytisch aktiven Zentren aufweisen.

Die erfindungsgemäßen Liganden werden bevorzugt zur Herstellung von enantiomer angereicherten organischen Verbindungen eingesetzt. Ganz besonders bevorzugt ist deren Anwendung in einem Membranreaktor. Dadurch können die normalerweise im Batchverfahren durchgeführten Synthesen quasikontinuierlich oder kontinuierlich erfolgen, was aus Kostensicht für ein technisches Verfahren besonders vorteilhaft erscheint. Die Anwendung der erfindungsgemäßen Liganden bzw. daraus hergestellten Katalysatoren im Membranreaktor läuft analog den im Stand der Technik beschriebenen Verfahren (DE 199 10 691.6; Wandrey et al., Tetrahedron Asymmetry 1999, 10, 923-928).
Der zur Hydrierung benötigte Wasserstoff kann dabei als Gas dem Reaktor zugeführt werden. In diesem Fall bietet sich die quasikontinuierliche Verfahrensweise an, bei der nach der Hydrierung im Reaktor die niedermolekularen Stoffe abgetrennt werden und anschließend eine neue Beladung mit darauffolgender Hydrierung erfolgt.
Im Falle der Transferhydrierung ("Asymmetric transferhydrogenation of C=O and C=N bonds", M. Wills et al. Tetrahedron: Asymmetry 1999, 10, 2045; "Asymmetric transferhydrogenation catylsed by chiral ruthenium complexes" R. Noyori et al. Acc. Chem. Res. 1997, 30, 97; "Asymmetric catalysis in organic synthesis", R. Noyori, John Wiley & Sons, New York, 1994, S.123; "Transition metals for organic Synthesis" Ed. M. Beller, C. Bolm, Wiley-VCH, Weinheim, 1998, Bd.2, S.97; "Comprehensive Asymmetric Catalysis" Ed.: Jacobsen, E.N.; Pfaltz, A.; Yamamoto, H., Springer-Verlag, 1999) ist jedoch eine kontinuierliche Verfahrensweise bevorzugt. Der Membranreaktor kann dabei als Cross-Flow- oder als Dead-End-Filtrationsmodul agieren (DE 19947505.9 sowie DE 19910691.6 oder "Engineering processes for Bioseparations" Edited by: Laurence R. Weatherley Seiten: 135-165; Butterworth-Heinemann, 1994; ISBN: 0 7506 1936 8).

Mithilfe der erfindungsgemäßen Liganden lassen sich bevorzugt C=C-, C=N- oder C=O-Doppelbindungen hydrieren.

Gegenstand der Erfindung ist ebenfalls ein molekulargewichtsvergrößerter Katalysator, der aus einem erfindungsgemäßen Liganden und Metallen oder Metallionen ausgewählt aus der Gruppe
Ru, Rh, Ir, Pd, Ni, Pt,
aufgebaut ist.

Zum Aufbau der erfindungsgemäßen Liganden können wie oben angegeben verschiedene Strategien verwendet werde [Verfahren a), b), c)]. Die Anbindung der beschriebenen Linker/aktiven Zentrums an das Pyrrolidin ist dem Fachmann freigestellt, erfolgt aber vorzugsweise über dessen Stickstoffunktion. Auch die Anbindung des Linkers/aktiven Zentrums an das Polymer oder Monomer ist dem Fachmann freigestellt, vorzugsweise nutzt man hier ebenfalls eine im Polymer oder Monomer vorhandene Funktionalität. Reaktionen mit denen der Fachmann dies bewerkstelligen kann, sind im allgemeinen Fachwissen beheimatet.

Weitere Kombinationen von Molekulargewichtsvergrößerung zu Linker/aktivem Zentrum:

Es gilt prinzipiell, daß die Anzahl der Linker/aktiven Zentren pro Monomer im Polymer möglichst hoch ist, so daß der Umsatz pro Polymer dadurch gesteigert ist. Auf der anderen Seite sollten die Zentren jedoch einen solchen Abstand voneinander einnehmen, daß eine gegenseitige negative Beeinflussung der Reaktivität (TOF, Selektivität) minimiert wird bzw. gar nicht erst stattfindet. Vorzugsweise sollte daher der Abstand der Linker/aktiven Zentren im Polymer voneinander im Bereich von 5-50 Monomereinheiten, vorzugsweise 10-25 Monomereinheiten, liegen.

Wie schon angedeutet werden dabei solche Stellen im Polymer oder zu polymerisierendem Monomer zur Anbindung des Linkers/aktivem Zentrums herangezogen, welche sich leicht Funktionalisieren lassen bzw. es erlauben, schon eine vorhandene Funktionalität zur Anbindung zu benutzen. So eignen sich bevorzugt Heteroatome oder ungesättigte Kohlenstoffatome zum Aufbau der Anbindung.

Z.B. können im Falle von Styrol/Polystyrol die vorhanden Aromaten als Verbindungspunkte zu den Linkern/aktiven Zentren herangezogen werden. An diese Aromaten können, vorzugsweise in 3-, 4-, 5-Stellung, besonders bevorzugt ist die 4-Stellung, über die normale Aromatenchemie Funktionalitäten gut angeknüpft werden. Vorteilhaft ist aber auch, der zu polymerisierenden Mischung z.B. bereits funktionalisiertes Monomer zuzumischen und nach der Polymerisation an die im Polystyrol vorhandenen Funktionalitäten den Linker zu binden. Vorteilhaft für diesen Zweck sind z.B. para-Hydroxy- oder para-Aminostyrolderivate geeignet.

Für Polyether bietet sich die ohnehin vorhandene terminale OH-Gruppe zur Anbindung an die Linker/aktiven Zentren durch Ester- oder Etherbildung oder durch Oxidation dieser Gruppe zu einer Säuregruppe mit anschließender Veresterung oder Amidbildung an (Nagel et al, Chem. Ber. 1986, 119, 3326-3343).

Im Falle der Polyacrylate ist im Monomerbestandteil jeweils eine Säuregruppe oder Estergruppe vorhanden, an der vor oder nach der Polymerisation der Linker oder das aktive Zentrum vorzugsweise über eine Ester- oder Amidbindung angebunden werden kann.

Polysiloxane als Molekulargewichtsvergrößerung werden vorzugsweise gleich so aufgebaut, daß intermittierend Silylengruppen vorhanden sind, welche durch Alkylreste, die Doppelbindungen oder Heteroatomen aufweisen, modifiziert sind. An diese Stellen können dann weiterhin die Linker/aktiven Zentren angekoppelt werden.
Vorzugsweise lassen sich diese unter Hydrosilylierungsbedingungen (Übersicht über die Hydrosilylierungsreaktion von Ojima in The Chemistry of Organic Silicon Compounds, 1989 John Wiley & Sons Ltd., 1480 - 1526) an die ins Auge gefaßten Funktionalitäten im Polymer anbinden.
Geeignete derart modifizierte Polysiloxane sind in der Literatur bekannt ("Siloxane polymers and copolymers" White et al., in Ed. S. Patai "The Chemistry of Organic Silicon Compounds" Wiley, Chichester, 1989, 46, 2954; C. Wandrey et al. TH:Asymmetry 1997, 8, 1975).

Der Linker dient dazu, einen Abstand zwischen aktivem Zentrum und Polymer aufzubauen, um gegenseitige für die Reaktion nachteilige Wechselwirkungen abzumildern bzw. auszuschalten. Eine geeignete Übersicht über Linkervorstufen, welche zur Verknüpfung mit dem Polymer/Monomer und aktivem Zentrum benutzt werden können, bietet folgendes Schema 2.

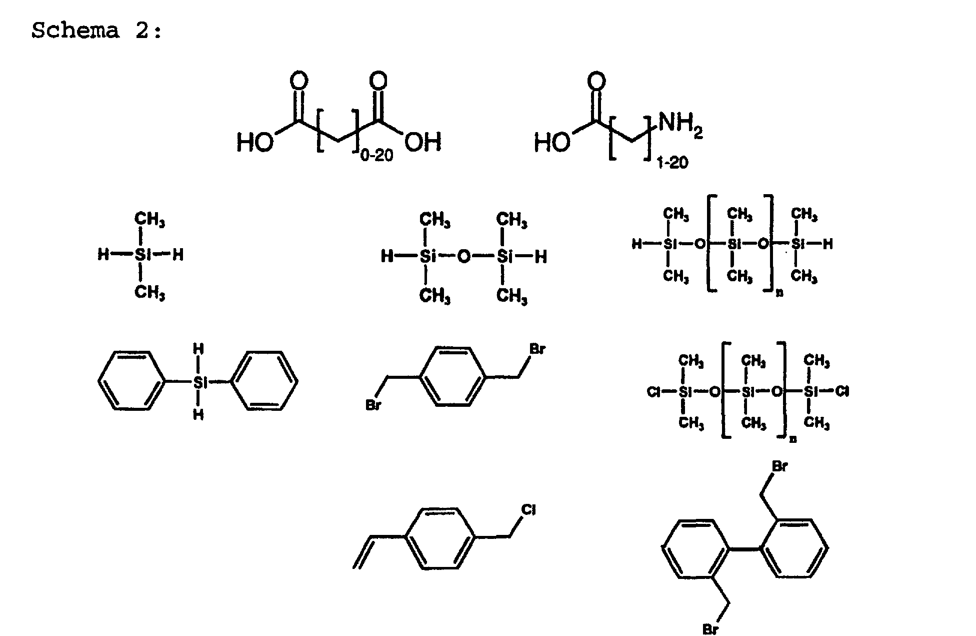

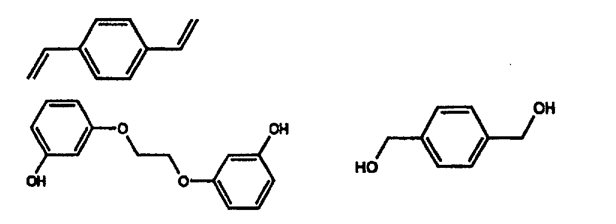

Die Auswahl richtet sich nach der Möglichkeit, die Linker einerseits gut an das aktive Zentrum andererseits an das Polymer/Monomer koppeln zu können. Bevorzugt sind jedoch Linker wie z. B. 1,4'-Biphenyl, 1,2-Ethylen, 1,3-Propylen, PEG-(2-10), α,ω-Siloxanylen oder 1,4-Phenylen sowie α,ω-1,4-Bisethylenbenzol oder Linker, welche ausgehend von Siloxanen der allgemeinen Formel I 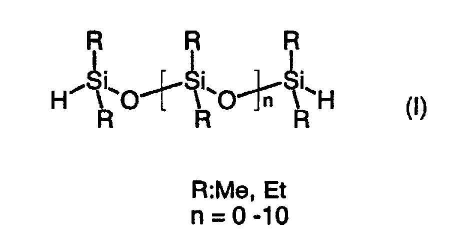 erhältlich sind. Diese lassen sich unter Hydrosilylierungsbedingungen (Übersicht über die Hydrosilylierungsreaktion von Ojima in The Chemistry of Organic Silicon Compounds, 1989 John Wiley & Sons Ltd., 1480 - 1526) leicht an evt. vorhandene Doppelbindungen in den Polymeren und geeignete funktionelle Gruppen der aktiven Zentren binden. Ganz besonders bevorzugt sind Linker auf Aminosäurebasis oder Dicarbonsäuren.

Aktives Zentrum bezeichnet im Rahmen der Erfindung den monomeren Ligand Bis-(3,4-diarylphosphinyl)-pyrrolidinen. Das Wort Aryl definiert in diesem Zusammenhang (C₆-C₁₈)-Aryl-Gruppen sowie ((C₁-C₈)-Alkyl) ₁₋₃- (C₆-C₁₈)-Aryl-Gruppen.

Als (C₁-C₈)-Alkyl sind anzusehen Methyl, Ethyl, *n*-Propyl, Isopropyl, *n*-Butyl, Isobutyl, *sec*-Butyl, *tert*-Butyl, Pentyl, Hexyl, Heptyl oder Octyl samt aller Bindungsisomeren. In diesem Zusammenhang bildet ein (C₁-C₈)-Alkoxy-Rest einen (C₁-C₈)-Alkyl-Rest, der über ein Sauerstoffatom an das betreffende Molekül gebunden ist.

(C₁-C₈)-Alkenylen bedeutet einen (C₁-C₈)-Alkylen mit der Maßgabe, daß mindestens eine Doppelbindung im Rest vorhanden ist.

Unter einem (C₆-C₁₈)-Arylrest wird ein aromatischer Rest mit 6 bis 18 C-Atomen verstanden. Insbesondere zählen hierzu Verbindungen wie Phenyl-, Naphthyl-, Anthryl-, Phenanthryl-, Biphenylreste. Dieser kann mit einer oder mehreren Resten wie (C₁-C₈)-Alkoxy, NR₂, (C₁-C₈)-Haloalkyl wie CF₃ substituiert sein.

Ein (C₇-C₁₉)-Aralkylrest ist ein über einen (C₁-C₈)-Alkylrest an das Molekül gebundener (C₆-C₁₈)-Arylrest. Unter einem (C₇-C₁₉)-Aralkylen-Rest ist ein Rest zu verstehen, der einerseits über den (C₁-C₈)-Alkylrest und anderseits über den (C₆-C₁₈)-Arylrest mit dem Molekül verbunden ist.

Im Rahmen der Erfindung wird unter Membranreaktor jedwedes Reaktionsgefäß verstanden, bei dem der Katalysator in einem Reaktor eingeschlossen wird, während niedermolekularere Stoffe dem Reaktor zugeführt werden oder ihn verlassen können. Dabei kann die Membran direkt in den Reaktionsraum integriert werden oder außerhalb in einem separaten Filtrationsmodul eingebaut sein, bei der die Reaktionslösung kontinuierlich oder intermittierend durch das Filtrationsmodul strömt und das Retentat in den Reaktor zurückgeführt wird. Geeignete Ausführungsformen sind u.a. in der WO98/22415 und in Wandrey et al. in Jahrbuch 1998, Verfahrenstechnik und Chemieingenieurwesen, VDI S. 151ff.; Wandrey et al. in Applied Homogeneous Catalysis with Organometallic Compounds, Vol. 2, VCH 1996, S.832 ff.; Kragl et al., Angew. Chem. 1996, 6, 684f. beschrieben.

### Beispiele:

### Acylierung zu MMA-PYRPHOS (3,4-Bis-(diphenylphosphino)-N-isobutenon-pyrrolidin):

Zu einer Lösung von 5,00 g 3,4-Bis-(diphenylphosphino)-pyrrolidin in 20mL Toluol und 20mL 2N NaOH werden bei 0°C 1,54 g Methacrylsäurechlorid in 35mL Toluol langsam zugetropft. Nach beendeter Reaktion werden die Phasen getrennt und die wäßrige Phase mit Toluol extrahiert. Die vereinigten organischen Phasen werden nacheinander mit verd. Salzsäure und ges. NaCl-Lösung gewaschen. Nach dem Trocknen über Magnesiumsulfat wird das Lösungsmittel im Vakuum abgezogen. Man erhält 5.7 g des gewünschten Produktes als weißes Pulver. Die NMR-Analytik bestätigt das Zielprodukt.

### Polymerisation zu PMMA-PYRPHOS:

Zu einer Lösung von 1.0mmol MMA-Pyrphos in Methylisobutylketon werden 20.0mmol Methylmethacrylat (MMA) sowie 0.1mmol Azoisobutyronitril (AIBN) gegeben. Nach Erwärmen über 20 h bei 80°C wird das Produkt in Petrolether gefällt und abfiltriert. Man erhält 1.5g des gewünschten Polymers als weißes Pulver. Die NMR-Analytik bestätigt das Zielprodukt.

### Asymmetrische Hydrierung:

Eine Lösung von 182mg PMMA-Pyrphos und 2,00g Acetamidozimtsäure in 60mL MeOH/H₂0 (5:1) werden bei 50°C und 50bar H₂ so lange gerührt, bis kein Wasserstoff mehr aufgenommen wird.

Anschließend wird das Druckgefäß entspannt und die Reaktionslösung mit Ether extrahiert. Nach dem Trocknen der organischen Phase über Magnesiumsulfat wird das Lösungsmittel im Vakuum abgezogen. Man erhält 1.8g N-Ac-Phenlyalanin mit einer Selektivität von ee=40%. Die HPLC-Analytik bestätigt die gewünscht Zielverbindung.

### Herstellung von Polyether-Pyrphos

### 1. Chlorkohlensäureester

Alle Operationen wurden unter Argon durchgeführt, um Luft und Feuchtigkeit auszuschliessen.

Eine Lösung von 1,32g (1.1 mmol) Brij 35 (C₁₂H₂₅(OCH₂CH₂)₃₂OH) )₃₂OH) bzw. 5,24g (1;1 mmol) Synperonic PE/P 103 (HO(CH₂CH₂O)₁₇(CH(CH₃)CH₂O)₅₆(CH₂CH₂O)₁₇H) in 10ml Dichlormethan werden langsam zu 90ml einer auf -40°C gekühlten Lösung von Phosgen (1,7662 mmol/ml) getropft und innerhalb 5h auf 0°C gebracht. Das überschüssige Phosgen wird unter entsprechenden Vosichtsmassnahmen durch Einengen der Lösung auf etwa 3ml entfernt und der verbleibende Rückstand direkt weiter verwendet.

### 2. Umsetzung der Chlorkohlensäureester mit Pyrphos ((R,R)-3,4-Bis(diphenylphosphino)-pyrrolidin)

Zu einer Lösung aus 0,483g (1.1 mmol) Pyrphos und 0,18ml (1.32 mmol) Triethylamin in 10 ml Dichlormethan werden in einer Argonatmosphäre und unter Rühren bei 0°C 1,1 mmol des entsprechenden Chlorkohlensäureesters in 3 ml CH₂Cl₂ getropft. Die Reaktionsmischung wird bei 0 bis 5 °C drei Stunden gerührt und anschließend eingeengt. Der Rückstand wird in 10 ml Ether aufgenommen und zum Auskristallisieren des Triethylaminhydrochlorid über Nacht stehengelassen. Am nächsten Tag wird das Gemisch inert filtriert, das Filtrat eingeengt und der Rückstand im Vakuum bei 50 °C getrocknet.

### Analyse von Brij 35 abgeleitetem Derivat (I): C₈₇H₁₄₃NO₂₅P₂ (1664, 82)

Ber.: C = 62,76 %; H = 8.65 %; N = 0,84 %; P = 3,72 %
Gef.: C = 63,57 %; H = 8,48 %; N = 1,26 %; P = 4,11 %
³¹P = -11,8 ppm (CDCl₃) Ausbeute = 1,34 g ( 80,5% )

### Analyse von Blockpolymeren Synperonic PE/P 103 abgeleitetem Derivat (II): C₂₉₄H₅₂₄N₂O₉₄P₄ (5714,51)

Ber.: C = 61,96 %; H = 9,27 %; N = 0,49 %; P = 2,17 %
Gef.: C 62,13 %; H = 9,15 %; N = 0,91 %; P 2,48 %
³¹P = -11,8 ppm (CDCl₃) Ausbeute = 5,27 g (92,2%)

Hydrierung von (Z)-α-Acetamidozimtsäuremethylester in Wasser und Methanol mit dem Katalysatorsystem: [Rh(COD)₂]BF₄ + amphiphilisierte Liganden (I) und (II); H₂ 1 bar; 25° C

| Medium | Rh:I:Substrat | t _{½} (min) | % eeS | Umsatz % |
|---|---|---|---|---|
| H₂O | 1:1:100 | ~ 10 h | 88 | 98 (Rh°↓) |
| | | | | |
| | Rh:II:Substrat | | | |
| H₂O | 2:1:100 | ~ 12 h | 80 | 94 (Rh°↓) |
| H₂O | 1:0,5:100 | ~ 11 h | 83 | 96 (Rh°↓) |
| Methanol | 1:0,5:100 | 248 min | 88 | 100 |
| H₂O+SDS (Rh:SDS=1:2) | 1:0,5:100 | ~ 9 h | 79 | 97 |
| SDS: Sodiumdodecylsulfat | | | | |

In einem erneuten Ansatz wurde 1 mmol Substrat, 0,0005 mmol Ligand (II), 0,001 mmol Rh(COD)₂BF₄ in 15 ml Methanol gelöst. Man hydrierte im ersten Fall bei 10 bar, RT und 24 h, im zweiten bei 20 bar, RT und 24 h.
Ergebnis: Fall 1) 88,6% ee; Fall 2) 89,5% ee

## Patentansprüche

1. Molekulargewichtsvergrößerte homogen lösliche Liganden mit mittleren Molekulargewichten im Bereich von 1.000 - 1.000.000 g/mol für Hydrierkatalysatoren aufweisend homochirale aktive Zentren aus Bis-(3,4-diarylphosphinyl)-pyrrolidinen, wobei diese Zentren über einen Linker ausgewählt aus der Gruppe
| | | |
|---|---|---|
| a) | -Si(R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)ₙ-W | n=0-20 |
| g) | Z-(X)ₙ-W | n=0-20 |
wobei
R bedeutet H, (C₁-C₈)-Alkyl, (C₆-C₁₈)-Aryl, (C₇-C₁₉)-Aralkyl, ((C₁-C₈) -Alkyl)₁₋₃ (C₆-C₁₈)-Aryl,
X bedeutet (C₆-C₁₈)-Arylen, (C₁-C₈)-Alkylen, (C₁-C₈)-Alkenylen, ((C₁-C₈) -Alkyl)₁₋₃-(C₆-C₁₈) -Arylen, (C₇-C₁₉)-Aralkylen,
Z bedeutet polymerseitig C(=O)O-, C(=O)NH-, C(=O)-, NR, O, CHR, CH₂, C=S, S, PR,
W bedeutet ligandenseitig C(=O)O-, C(=O)NH-, C(=O)-, NR, O, CHR, CH₂, C=S, S, PR,
oder direkt an das molekulargewichtsvergrößernde Polymer gebunden sind.

2. Ligand nach Anspruch 1,
**dadurch gekennzeichnet, daß**
die Molekulargewichtsvergrößerung durch Polyacrylate, Polyvinylpyrrolidinone, Polysiloxane, Polybutadiene, Polyisoprene, Polyalkane, Polystyrole, Polyoxazoline oder Polyether oder Mischungen derselben gebildet wird.

3. Ligand nach Anspruch 1 und/oder 2,
**dadurch gekennzeichnet, daß** die Molekulargewichtsvergrößerung durch Polyacrylate, Polystyrole, Polysiloxane oder Polyether gebildet wird.

4. Ligand nach einem oder mehreren der Ansprüche 1 bis 3,
**dadurch gekennzeichnet, daß**
dessen mittleres Molekulargewicht im Bereich von 5.000 - 300.000 g/mol liegt.

5. Verfahren zur Herstellung von Liganden nach Anspruch 1,
**dadurch gekennzeichnet, daß** man
a) das katalytisch aktive Zentrum mit angebundenem Linker oder direkt an ein Monomer bindet und dieses in Gegenwart nicht modifizierter Monomere polymerisiert,
b) das katalytisch aktive Zentrum über einen Linker oder direkt an das fertige Polymer bindet, oder
c) Polymere nach a) oder b) erstellt und diese mit anderen Polymeren copolymerisiert, welche katalytisch aktive Zentren aufweisen oder keine katalytisch aktiven Zentren aufweisen.

6. Verwendung der Liganden nach Anspruch 1 zur Herstellung von enantiomer angereicherten organischen Verbindungen.

7. Verwendung nach Anspruch 6,
**dadurch gekennzeichnet, daß**
man in einem Membranreaktor arbeitet.

8. Verwendung nach Anspruch 6 und/oder 7,
**dadurch gekennzeichnet, daß**
man C=C-, C=N- oder C=O-Doppelbindungen hydriert.

9. Verwendung nach einem oder mehreren der Ansprüche 6 bis 8,
**dadurch gekennzeichnet, daß**
man mittels Transferhydrierung hydriert.

10. Molekulargewichtsvergrößerter Katalysator
**dadurch gekennzeichnet, daß**
er aus einem Liganden der Ansprüche 1-4 und Metallen oder Metallionen ausgewählt aus der Gruppe
Ru, Rh, Ir, Pd, Ni, Pt,
aufgebaut ist.

## Claims

1. Molecular weight-enlarged, homogeneously soluble ligands having an average molecular weight in the range from 1,000-1,000,000 g/mol for hydrogenation catalysts comprising homochiral active centres of bis(3,4-diarylphosphinyl)pyrrolidines, wherein these active centres are bound via a linker selected from the group
| | | |
|---|---|---|
| a) | -Si(R₂)- | |
| b) | -(SiR₂-O)ₙ- | n = 1-10000 |
| c) | -(CHR-CHR-O)ₙ- | n = 1-10000 |
| d) | -(X)ₙ- | n = 1-20 |
| e) | Z-(X)ₙ- | n = 0-20 |
| f) | - (X)ₙ-W | n = 0-20 |
| g) | 2-(X)ₙ-W | n = 0-20 |
wherein
R means H, (C₁-C₈) alkyl, (C₆-C₁₈) aryl, (C₇-C₁₉) aralkyl, ((C₁-C₈) alkyl)₁₋₃-(C₆-C₁₈) aryl,
X means (C₆-C₁₈) arylene, (C₁-C₈) alkylene, (C₁-C₈) alkenylene, ((C₁-C₈) alkyl)₁₋₃-(C₆-C₁₈) arylene, (C₇-C₁₉) aralkylene,
Z means on the polymer side C(=O)O-, C(=O)NH-, C(=O)-, NR, O, CHR, CH₂, C=S, S, PR,
W means on the ligand side C(=O)O-, C(=O)NH-, C(=O)-, NR, O, CHR, CH₂, C=S, S, PR,
or directly to the molecular weight-enlarging polymer.

2. Ligand according to claim 1,
**characterised in that**
the molecular weight enlargement is formed by polyacrylates, polyvinylpyrrolidinones, polysiloxanes, polybutadienes, polyisoprenes, polyalkanes, polystyrenes, polyoxazolines or polyethers or mixtures thereof.

3. Ligand according to claim 1 and/or 2,
**characterised in that**
the molecular weight enlargement is formed by polyacrylates, polystyrenes, polysiloxanes or polyethers.

4. Ligand according to one or more of claims 1 to 3,
**characterised in that**
the average molecular weight thereof is in the range from 5,000-300,000 g/mol.

5. Process for the production of ligands according to claim 1,
**characterised in that**
a) the catalytically active centre is bound with a bound linker or directly to a monomer and the latter is polymerised in the presence of unmodified monomers,
b) the catalytically active centre is bound via a linker or directly to the finished polymer or
c) polymers according to a) or b) are prepared and are copolymerised with other polymers which comprise catalytically active centres or comprise no catalytically active centres.

6. Use of the ligands according to claim 1 for the production of enantiomerically enriched organic compounds.

7. Use according to claim 6,
**characterised in that**
a membrane reactor is used.

8. Use according to claim 6 and/or 7,
**characterised in that**
C=C, C=N or C=O double bonds are hydrogenated.

9. Use according to one or more of claims 6 to 8,
**characterised in that**
hydrogenation is performed by transfer hydrogenation.

10. Molecular weight-enlarged catalyst
**characterised in that**
it is synthesised from a ligand according to claims 1-4 and metals or metal ions selected from the group Ru, Rh, Ir, Pd, Ni, Pt.

## Revendications

1. Ligands solubles d'une manière homogène dont le poids moléculaire est augmenté ayant des poids moléculaires moyens dans la zone de 1000-1.000.000 g/mol pour des catalyseurs d'hydrogénation possédant des centres actifs homochiraux à base de bis-(3,4-diarylphosphinyl)pyrrolidines, dans lesquels ces centres sont reliés par l'intermédiaire d'un moyen d'assemblage choisi dans le groupe de :
| | | |
|---|---|---|
| a) | -Si(R₂)- | |
| b) | -(SiR₂-O)ₙ- | n=1-10000 |
| c) | -(CHR-CHR-O)ₙ- | n=1-10000 |
| d) | -(X)ₙ- | n=1-20 |
| e) | Z-(X)ₙ- | n=0-20 |
| f) | -(X)ₙ-W | n=0-20 |
| g) | Z-(X)ₙ-W | n=0-20 |
dans lesquels
R signifie H, alkyle en (C₁-C₈), aryle en (C₆-C₁₈), aralkyle en (C₇-C₁₉), (alkyle) en C₁-C₈)₁₋₃ aryle en (C₆-C₁₈),
X signifie arylène en (C₆-C₁₈), alkylène en (C₁-C₈), alkenylène en (C₁-C₈), alkyl en (C₁-C₈)₁₋₃-arylène en (C₈-C₁₈), aralkylène en (C₇-C₁₉),
Z signifie du côté du polymère C(=O)O, C(=O)NH, C(=O)-, NR, O, CHR, CH₂, C=S, S, PR,
W signifie du côté du ligand C(=O)O, C(=O)NH, C(=O), NR, O, CHR, CH₂, C=S, S, PR,
ou directement sur le polymère qui augmente le poids moléculaire.

2. Ligand selon la revendication 1,
**caractérisé en ce que**
l'augmentation du poids moléculaire est formée par des polyacrylates, des polyvinylpyrrolidones, des polysiloxanes, des polybutadiènes, des polyisoprènes, des polyalkanes, des polystyrènes, des polyoxazolines, ou des polyéthers ou des mélanges de ceux-ci.

3. Ligand selon l'une quelconque des revendications 1 ou 2,
**caractérisé en ce que**
l'augmentation du poids moléculaire est formée par des polyacrylates, des polystyrènes, des polysiloxanes ou des polyéthers.

4. Ligand selon l'une quelconque des revendications 1 à 3,
**caractérisé en ce que**
leur poids moléculaire moyen se situe dans la zone de 5000 à 300.000 g/mol.

5. Procédé de production de ligands selon la revendication 1,
**caractérisé en ce que**
a) on relie le centre catalytiquement actif à l'élément de liaison auquel il est attaché ou directement à un monomère, et on polymérise celui-ci en présence d'un monomère non modifié,
b) on relie le centre catalytiquement actif par l'intermédiaire d'un élément de liaison ou directement au polymère terminé ou,
c) on relie des polymères selon a) ou b) et on copolymérise ceux-ci avec d'autres polymères qui possèdent des centres actifs catalytiquement ou qui ne possèdent aucun centre catalytiquement actif.

6. Utilisation des ligands selon la revendication 1, en vue de la préparation de composés organiques enrichis en énantiomères.

7. Utilisation selon la revendication 6,
**caractérisée en ce qu'**
on opère dans un réacteur à membrane.

8. Utilisation selon l'une quelconque des revendications 6 et/ou 7,
**caractérisée en ce qu'**
on hydrogène des doubles liaisons C=C, C=N ou C=O.

9. Utilisation selon l'une quelconque des revendications 6 à 8,
**caractérisée en ce qu'**
on hydrogène à l'aide d'une hydrogénation par transfert.

10. Catalyseur dont le poids moléculaire est augmenté,
**caractérisé en ce qu'**
il est constitué en un ligand selon l'une quelconque des revendications 1 à 4 et en des métaux ou des ions métalliques choisis dans le groupe du Ru, Rh, Ir, Pd, Ni, Pt.
